# EUROPÄISCHE PATENTSCHRIFT

(11) **EP 2 073 992 B1**
(45) Veröffentlichungstag und Bekanntmachung des Hinweises auf die Patenterteilung: **02.12.2009**
(21) Anmeldenummer: 07817623.7
(22) Anmeldetag: 05.10.2007
(51) Int. Cl.: B60H 1/00

(54) **KLIMA- ODER/UND HEIZUNGSANLAGE MIT ZUSAMMENGESETZTEM GEHÄUSE**
AIR CONDITIONING AND/OR HEATING SYSTEM WITH AN ASSEMBLED HOUSING
INSTALLATION DE CLIMATISATION ET/OU DE CHAUFFAGE AVEC BOÎTIER ASSEMBLÉ

(30) Priorität: 06.10.2006 DE 102006047367
(43) Veröffentlichungstag der Anmeldung: 01.07.2009
(73) Patentinhaber: Konvekta AG, 34613 Schwalmstadt (DE)
(72) Erfinder: SCHMITT, Constantin, 34613 Schwalmstadt (DE); BATTENBERG, Christian, 34637 Schrecksbach (DE); MÄRZ, Alfred, 34637 Schrecksbach (DE); SCHÜTZ, Wolfgang, 34295 Edermünde (DE); BEST, Klaus, 34626 Neukirchen (DE)
(74) Vertreter: Lindinger, Bernhard
(86) Internationale Anmeldenummer: PCT/DE2007/001781
(87) Internationale Veröffentlichungsnummer: WO 2008/040339

(56) Entgegenhaltungen:
- WO-A-2004/098931
- DE-A1- 10 046 935
- DE-A1- 10 328 275
- DE-A1- 10 345 997
- DE-A1- 19 913 776
- DE-A1-102004 025 868
- DE-A1-102004 032 920
- DE-B3-102004 051 874
- US-B1- 6 763 669

## Beschreibung

### GEBIET DER TECHNIK

Die Erfindung bezieht sich gemäß dem Oberbegriff von Anspruch 1 auf eine Klima- oder / und Heizungsanlage für ein Fahrzeug mit einem zumindest drei Gehäusemodule umfassenden Gehäuse umhausend zumindest ein Bauelement der Klima- oder / und Heizungsanlage. Dabei sind neben verschiedenen anderen Arten von Fahrzeugen vor allem auch Omnibusse und Schienenfahrzeuge zu erwähnen, in oder insbesondere auch auf die Ausführungsbeispiele solcher Klima- oder / und Heizungsanlagen montiert werden.
Ein Bauelement einer Klima- oder / und Heizungsanlage ist dabei ein Funktionsteil einer solchen Anlage, wie zum Beispiel eine Wärmetauscherbatterie, ein Gebläse, ein Kondensator, ein Kompressor oder eine Expansionseinrichtung zum Expandieren des Kältemittels. Eine Bauelementeinheit wird aus mehreren zusammengesetzten Bauelementen gleicher Art gebildet, wie beispielsweise aus einer Vielzahl aneinandergereihter Wärmetauscherbatterien.
Eine Wärmetauscherbatterie kann aus einem Verdampfer, aus einem Heizungswärmetauscher oder aus diesen beiden bestehen. Ein Gehäusemodul kann ein Gehäuseteil oder ein Teil eines Gehäuseteils sein.

### STAND DER TECHNIK

Bei einer Klimaanlage verdichtet ein Kompressor ein gasförmiges Kältemittel und transportiert es über eine Leitung zu einem Kondensator. Der als Wärmetauscher dienende Kondensator wird durch Luft gekühlt, die mittels eines Gebläses über einen Lufteinlass angesaugt und über einen Luftauslass abgeführt wird. Dadurch verflüssigt sich das zunächst gasförmige und unter einem hohen Druck stehende Kältemittel. Das immer noch unter hohem Druck stehende, nunmehr flüssige Kältemittel wird über eine Leitung zu einer Expansionseinrichtung wie beispielsweise einer Drossel geführt, wodurch sich das Kältemittel entspannen kann. Durch das Entspannen geht das Kältemittel in den gasförmigen Zustand über und entzieht dabei der Umgebung Wärme. Dieser Wärmeentzug wirkt über einen als Wärmetauscher dienenden Verdampfer auf die Raumluft des zu kühlenden Fahrzeugraums. Die Raumluft wird dabei mittels eines Gebläses durch eine Einlassöffnung angesaugt, an den Verdampfer geleitet und so gekühlt durch entsprechende Öffnungen in den zu kühlenden Fahrzeugraum geführt. Dadurch, dass das Kältemittel bei der Kühlung der Raumluft Wärme aufgnommen hat, ist es erwärmt worden. Es wird wieder zurück zum Kompressor geleitet und wieder komprimiert. Der Kühlkeislauf beginnt darauf erneut.

Bei einer Heizungsanlage wird ein für Fahrzeugheizungen bekannter Heizungswärmetauscher verwendet. Dieser erwärmt die mittels eines Gebläses über den Heizungswärmetauscher geführte und sodann durch Öffnungen in den Fahrzeugraum geleitete Luft.

Bei eine Kombination von Klima- und Heizungsanlage für Fahrzeuge besteht beispielsweise eine Wärmetauscherbatterie aus einem Heizungswärmetauscher und aus einem Verdampfer.

Eine modular aufgebaute Klima- oder / und Heizungsanlage für Fahrzeuge ist aus der US-Patentschrift US 6 763 669 B1 bekannt. Die dort offenbarte Aufdachklimaanlage ist aus aneinander fügbaren Modulen aufgebaut. Im Gehäuse jedes der Module sind die Bauelemente einer kompletten Klimaanlage wie Verdampfer, Kondensator und Energiebereich mit Kompressor und Expansionseinrichtung enthalten. Eine solche Modulbauweise mit den jeweiligen Modulgehäusen hat die Nachteile, dass je nach Anzahl der Module entsprechend mehrfach gleiche Bauelemente einer Klimaanlage vorhanden sind und nur eine Leistungsklasse von Bauelementen wie beispielsweise ein Verdampfer einer bestimmten Größe für jedes Modul verwendet wird. Eine Leistungsvergrößerung der Klimaanlage wird dabei allein durch eine entsprechend höhere Anzahl von jeweils sämtliche Bauelemente einer Klimaanlage enthaltenden Modulen erreicht.

Die deutschen Offenlegungsschrift DE 103 28 275 A1 schlägt eine Klima- oder / und Heizungsanlage mit einem aus mehreren Gehäusesegmenten aufgebauten Gehäuse vor, wobei mindestens ein Gehäusesegment als Einschubteil ausgeführt ist. Dieses Einschubteil umfasst aber mindestens ein zusätzliches Bauelement, so dass eine Vergrößerung der Klima- oder / und Heizungsanlage und damit auch des Gehäuses nur durch den Einschub eines für sich in der Leistungsklasse festgelegten Bauelements mit dazugehörigem Gehäusesegment erfolgt. Für Bauelemente verschiedener Leistungsklassen muss hingegen jeweils ein entsprechend in der Größe angepasstes einzelnes Gehäusesegment speziell gefertigt werden. Eine solche breite Palette von Gehäusesegmenten für jede Leistungsklasse eines Bauelements ist kostenintensiv. Ferner sind bei besonders hohen Leistungsklassen die Bauelemente unter Umständen sehr groß und damit ein einzelnes Gehäusesegment dafür ebenfalls sehr groß, weswegen dessen Verarbeitung und Einbau unhandlich ist.

Des Weiteren ist eine Klima- oder / und Heizungsanlage in der deutschen Offenlegungsschrift DE 10 2004 025 868 A1 bekannt, bei der die Deckel-, Boden- und Seitenwand des Gehäuses entsprechend der Leistungsklasse in der Länge angepasst werden. Dieses erfolgt durch Abschneiden oder Absägen eines Teils je nach Bedarf in erforderlicher Länge. Der dann nicht mehr zu verwendende Restteil ist ein die Kosten und den Materialbedarf erhöhender Überschuss. Ferner sind die Gehäusewandstücke in der Länge mindestens für ein gesamtes Bauelement bemessen, so dass bei hohen Leistungsklassen der Bauelemente unter Umständen diese sehr lang sind und deshalb die Gehäusewandstücke auch große Längen aufweisen. Solche langen Stücke sind unhandlich zu verarbeiten und einzubauen.

In der deutschen Offenlegungsschrift DE 199 13 776 A1 wird ein modularer Aufbau der Bauelemente einer Klimaanlage für insbesondere Schienenfahrzeuge offenbart. Zumindest ein Teil der Bauelemente ist dabei in einer einzigen Gehäuseschale befestigt. Ein modularer Aufbau aus mehreren Modulen des Gehäuses und damit auch eine Anpassung der Ausdehnung des Gehäuses an die jeweilige Leistungsklasse der Bauelemente ist in der deutschen Offenlegungsschrift DE 199 13 776 A1 jedoch nicht offenbart.

Ein in in der deutschen Offenlegungsschrift DE 10 2004 032 920 A1 offenbartes Klimagerät, welches auch für Fahrzeuge geeignet ist, hat ein Gehäuse aus zwei zusammenfügbaren Gehäuseschalen aus geschäumtem Kunststoff. Jedoch sind diese Gehäuseschalen genau auf eine Größe von Klimageräte und damit auf eine Größe der jeweiligen Bauelemente des Klimageräts festgelegt. Eine Anpassungsmöglichkeit der Ausdehnung des Gehäuses an verschiedene Leistungsklassen eines Bauelements des Klimageräts ist nicht vorgesehen. Auch in der in der deutschen Offenlegungsschrift DE 100 46 935 A1 offenbarten modularen Klima oder / und Heizungsanlage für Nutzfahrzeuge ist an eine solche Anpassungsmöglichkeit nicht gedacht worden.

In der deutschen Offenlegungsschrift DE 103 45 997 A1 wird eine modular aufgebaute Aufdachklimaanlage für Fahrzeuge offenbart, bei der Gehäusemodule je nach Größe der Anlage aneinander gekoppelt sein können. Jedoch enthält dabei jedes Modul mindestens ein Bauelement der Klimaanlage, so dass bei aneinander gekoppelten Modulen eine größere Leistung nur durch die aneinander gekoppelten Bauelemente eines jeweiligen Moduls erreicht wird. Eine Anpassungsmöglichkeit in der Ausdehnung des Gehäuses je nach Größe bziehungsweise Leistungsklasse eines Bauelements ist jedoch nicht vorgesehen. Damit hat die in der deutschen Offenlegungsschrift DE 103 45 997 A1 offenbarte Klimaanlage den Nachteil, dass bei einer Leistungssteigerung mehrere insgesamt kostenintensive kleinere Bauelemente aneinander gekoppelt sein müssen und nicht ein einziges, größeres Bauelement in die Anlage integriert werden kann.

In der internationalen Publikation der PCT-Anmeldung WO 2004/098931 A1 ist eine modular aufgebaute Aufdachklimaanlage für Fahrzeuge offenbart, bei der jedoch Gehäusemodule nicht explizit erwähnt werden und eine in sich abgeschlossene Klimaanlageneinheit entweder aus einem Verdampfermodul und einem Kondensatormodul oder aus zwei Verdampfermodulen und zwei Kondensatormodulen aufgebaut ist. Dabei kann sich nur jeweils ein Bauelement der Anlage, wie beispielsweise ein Verdampfer, in einfacher oder doppelter Länge und damit doppelter Leistungsstärke über ein Modul beziehungsweise über ein Doppelmodul erstrecken. Dieses stellt eine große Einschränkung hinsichtlich der Variabilität der zu verwendenden Größen beziehungsweise Leistungsklassen eines Bauelements der Klimaanlage, wie zum Beispiel eines Verdampfers, dar.
DE 10 2004 051 874 B3 offenbart eine Klima - oder / und Heizungsanlage nach dem Oberbegriff des Auspruchs 1.

Der Erfindung liegt daher die Aufgabe zugrunde, eine verbesserte Klima- oder / und Heizungsanlage für ein Fahrzeug mit einem zumindest drei Gehäusemodule umfassenden Gehäuse umhausend zumindest ein Bauelement der Klima- oder / und Heizungsanlage bereitzustellen, wobei in einfacher und kostengünstige Weise das Gehäuse für verschiedene Größen eines Bauelements jeweils ausgelegt sein kann.

### ZUSAMMENFASSUNG DER ERFINDUNG

Die Aufgabe wird durch eine Klima- oder / und Heizungsanlage für ein Fahrzeug mit einem zumindest drei Gehäusemodule umfassenden Gehäuse umhausend zumindest ein Bauelement der Klima- oder / und Heizungsanlage, wobei das Gehäuse und / oder ein aus Gehäusemodulen aufgebautes Gehäuseteil zwei Gehäuseteilendmodule und eine beliebige Anzahl (n=1, 2,...) von mindestens einem dazwischen gefügten Gehäuseteilzwischenmodul enthält und in der Ausdehnung zumindest durch die Anzahl und / oder Größe der / des Gehäuseteilzwischenmodul(e)/s je nach Größe zumindest eines im Gehäuse befindlichen Bauelements der Klima- oder / und Heizungsanlage ausgestaltet ist, gelöst.

Dieses hat den Vorteil, dass für die jeweiligen Abmessungen eines Bauelements, wie zum Beispiel bei Wärmetauscherbatterien unterschiedlicher Größe, kein speziell dafür angefertigtes, komplettes Gehäuse benötigt wird, sondern ein für verschiedene Größen einheitliches Grundgehäuse mit jeweils einer an die Größe des Bauelements angepassten Anzahl (n= 1,...) und / oder Größe von dazwischen gefügte(m) /n Gehäusemodul /en verwendet werden kann. Dieses spart Kosten und Aufwand bei der Fertigung der Gehäuse. Zumindest mit durch die Anzahl und / oder Größe de(s) /r Gehäuseteilzwischenmodul(s) /e kann das Gehäuse und / oder Gehäuseteil in der Ausdehnung je nach der durch die Leistungsklasse gegebenen Größe des Bauelements einfach in Modulbauweise angepasst sein. Somit können je nach Leistungsklasse eine entsprechende Anzahl (n= 1, 2,...) von Gehäuseteilzwischenmodulen und / oder Gehäuseteilzwischenmodul /e unterschiedlicher Größe in das Grundgehäuse eingefügt sein.

Ein weiterer Vorteil zeigt sich bei besonders großen Bauelementen einer Klima- oder / und Heizungsanlage für Fahrzeuge. Durch die erfindungsgemäße Aufteilung eines einem solchen Bauelement zugeordneten Gehäuseteils der Klima- oder / und Heizungsanlage in Gehäusemodule sind die zu fertigen Einheiten, nämlich die Gehäusemodule, kleiner und damit handlich zu verarbeiten.

In den Unteransprüchen sind vorteilhafte Ausgestaltungen, Weiterbildungen und Verbesserungen des jeweiligen Gegenstandes der Erfindung angegeben.

Eine weitere vorteilhafte Ausgestaltung der erfindungsgemäßen Klima- oder / und Heizungsanlage ist die Anbringbarkeit des Gehäuses auf einem Dach eines Fahrzeugs. So kann die Klima- oder / und Heizungsanlage an einer insbesondere für die Raumkühlung strömungstechnisch günstigen Position außerhalb der Fahrgastzelle positioniert werden. Alternativ dazu kann das Gehäuse auch zum Teil in einem Dach eines Fahrzeugs integrierbar ausgestaltet sein, wodurch das Gehäuse nur teilweise über das Dach des Fahrzeugs hinausragt, was als Vorteil eine geringere Höhe des Dachaufbaus zur Folge hat.

Gemäß einer weiteren Verbesserung der vorliegenden Erfindung sind zumindest zwei der Gehäusemodule luft- und wasserdicht miteinander verbunden. Damit wird eine Eindringen von Spritzwasser in das Gehäuse vermieden und ein unerwünschtes Ansaugen von Nebenluft nicht zugelassen.

Nach einer vorteilhaften Weiterbildung der erfindungsgemäßen Klima- oder / und Heizungsanlage sind zumindest zwei der Gehäusemodule starr miteinander verbunden. Dadurch wird vor allem für sich außen am oder auf dem Fahrzeug befindende Gehäuse eine ausreichende Festigkeit gewährleistet. Diese kann durch nicht lösbare Verbindung von Gehäusemodulen noch verbessert werden. Alternativ dazu hat hingegen eine lösbare Verbindung von Gehäusemodulen den Vorteil, dass defekte oder beschädigte Gehäusemodule schnell ausgetauscht werden können oder bei Reparaturen das Gehäuse nur bei dem jeweiligen Gehäusemodul geöffnet zu werden braucht.

In einer vorteilhaften Ausgestaltung der vorliegenden Erfindung ist das Gehäuse zumindest zur Umhausung eines Gebläses oder einer Gebläseeinheit ausgestaltet. Damit ist jedenfalls das / die in jeder erfindungsgemäßen Anlage enthaltene Gebläse oder Gebläseeinheit in dem Gehäuse unterbringbar.

Gemäß einer weiteren vorteilhaften Ausgestaltung der erfindungsgemäßen Klima- oder / und Heizungsanlage zählen zu den Gehäuseteilen ein Deckelteil und / oder ein Verdampferkasten, wobei das Deckelteil und / oder der Verdampferkasten als Gehäusemodule zwei Gehäuseteilendmodule und eine beliebige Anzahl (n=1, 2,...) dazwischen gefügter Gehäuseteilzwischenmodule enthält / enthalten. So sind diese durch die Abmessung eines Bauelements, wie beispielsweise eines Verdampfers, in ihrer Ausdehnung besonders betroffenen Gehäuseteile auf einfache Weise auf die jeweilige Leistungsklasse und damit Abmessung der Bauelemente angepasst aus Gehäusemodulen zusammengefügt.

Eine weitere Verbesserung der vorliegenden Erfindung ist die Verwendung zumindest eines Gehäusemoduls, das als Material geschäumten Kunststoff enthält. Damit ist das Gehäuse der Klima- oder / und Heizungsanlage besonders leicht und ist kostengünstig sowie einfach herzustellen.

Besonders geeignet ist die vorliegende Erfindung für Omnibusse und Schienenfahrzeuge, denn dort werden zumeist große Bauelemente einer Klima- oder / und Heizungsanlage eingesetzt.

### KURZE BESCHREIBUNG DER ZEICHNUNGEN

Anhand der Zeichnungen werden Ausführungsbeispiele der Erfindung erläutert.

### Es zeigen

Fig. 1 eine schematische Darstellung eines Ausführungsbeispiels einer auf dem Dach eines Omnibusses angebrachten erfindungsgemäßen Klima- oder / und Heizungsanlage;
Fig. 2a eine schematische Explosionsdarstellung eines Ausführungsbeispiels eines erfindungsgemäßen Gehäuses ohne Deckelteil einer erfindungsgemäßen Klima- oder / und Heizungsanlage;
Fig. 2b eine schematische Darstellung im zusammengefügten Zustand des in Figur 2a gezeigten Ausführungsbeispiels des erfindungsgemäßen Gehäuses ohne Deckelteil einer erfindungsgemäßen Klima- oder / und Heizungsanlage.
Fig. 3a eine schematische Explosionsdarstellung eines Ausführungsbeispiels eines aus einem Deckelteil und einem Verdampferkasten bestehenden erfindungsgemäßen Gehäuses einer erfindungsgemäßen Klima- oder / und Heizungsanlage;
Fig. 3b eine schematische Darstellung im zusammengefügten Zustand des in Figur 3a gezeigten Ausführungsbeispiels eines aus einem Deckelteil und einem Verdampferkasten bestehenden erfindungsgemäßen Gehäuses einer erfindungsgemäßen Klima- oder / und Heizungsanlage;
Fig. 4 eine schematische Explosionsdarstellung eines weiteren Ausführungsbeispiels eines aus einem Deckelteil und einem Verdampferkasten bestehenden erfindungsgemäßen Gehäuses einer erfindungsgemäßen Klima- oder / und Heizungsanlage;
Fig. 5a eine schematische Darstellung eines Ausführungsbeispiels eines erfindungsgemäßen Gehäuses beinhaltend zu einer kleinen Leistungsklasse zählende Wärmetauscherbatterien einer erfindungsgemäßen Klima- oder / und Heizungsanlage;
Fig. 5b eine schematische Darstellung eines Ausführungsbeispiels eines erfindungsgemäßen Gehäuses beinhaltend zu einer mittleren Leistungsklasse zählende Wärmetauscherbatterien einer erfindungsgemäßen Klima- oder / und Heizungsanlage;
Fig. 5c eine schematische Darstellung eines Ausführungsbeispiels eines erfindungsgemäßen Gehäuses beinhaltend zu einer großen Leistungsklasse zählende Wärmetauscherbatterien einer erfindungsgemäßen Klima- oder / und Heizungsanlage, und
Fig. 6 eine schematische Darstellung von Ausführungsbeispielen zweier verschieden großer erfindungsgemäßer Gehäuseteilzwischenmodule für einen modular aufgebauten Verdampferkasten einer erfindungsgemäßen Klima- oder / und Heizungsanlage.

### AUSFÜHRLICHE BESCHREIBUNG DER ERFINDUNG

In den Figuren bezeichnen gleiche Bezugszeichen gleiche oder funktionsgleiche Komponenten. Alle Zeichnungen sind schematisch zu verstehen. Auf maßstabsgetreue Abbildungen wurde zum Zwecke erhöhter Klarheit der Darstellung verzichtet.

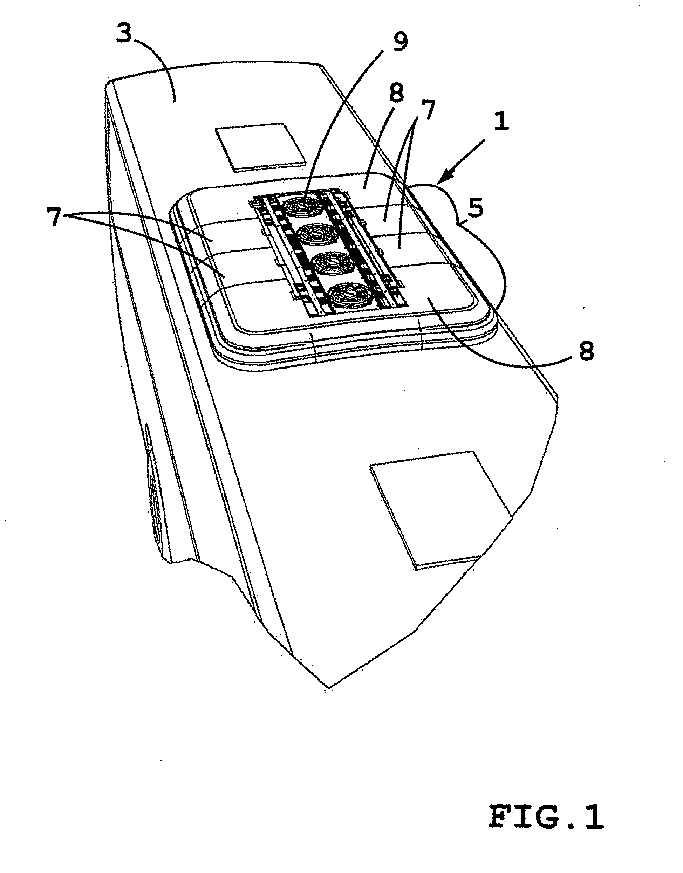

In **Figur 1** ist schematisch ein Ausführungsbeispiel einer auf dem Dach eines Omnibusses 3 angebrachten erfindungsgemäßen Klima- oder / und Heizungsanlage 1 dargestellt. Das Gehäuse 5 der Klima- oder / und Heizungsanlage 1 ist erfindungsgemäß aus mehreren quer zur Längsrichtung des Busdachs 3 angeordneten Gehäusemodulen 7, 8 aufgebaut, wobei mit durch die Anzahl der so angeordneten Gehäusemodule 7, 8 in diesem Beispiel bestehend aus zwei Gehäuseteilzwischenmodulen 7 zwischen zwei Gehäuseteilendmodulen 8 der Größe der umhausten und einer bestimmten Leistungsklasse zugeordneten Bauelemente wie Wärmetauscherbatterie, Gebläse und Kondensatoreinheit 9 Rechnung getragen wird. Das Gehäuse 5 der Klima- oder / und Heizungsanlage 1 kann beispielsweise aus Aluminium, stabilem Spritzgußkunststoff oder geschäumten Kunststoff bestehen.

Bauelemente der Klima- oder / und Heizungsanlage 1, die sich nicht im Gehäuse 5 befinden, können beispielsweise im Fahrzeuginneren untergebracht sein.

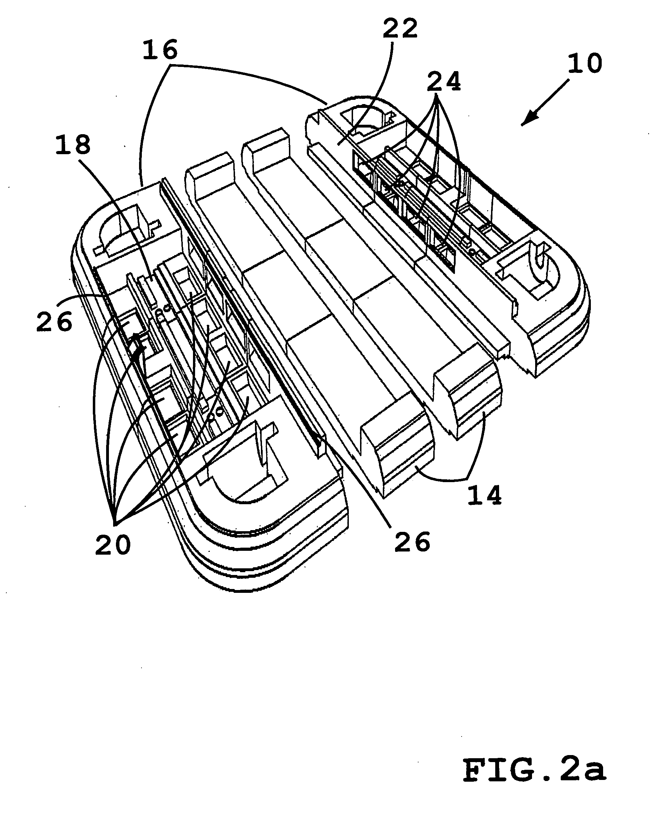

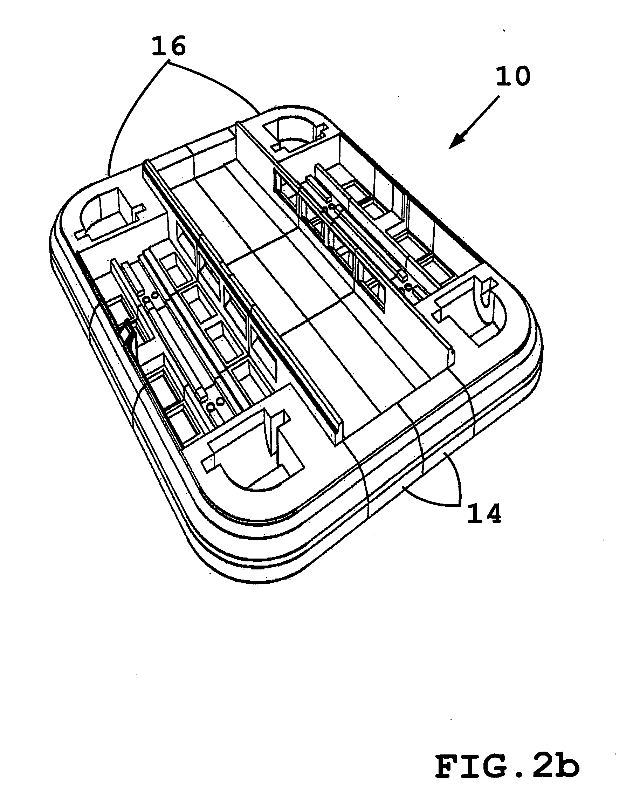

**Figur 2a** zeigt schematisch in Explosionsdarstellung ein Ausführungsbeispiel eines erfindungsgemäßen Gehäuses 10 ohne Deckelteil einer erfindungsgemäßen Klima- oder / und Heizungsanlage. In **Figur 2b** ist dasselbe Ausführungsbeispiel im zusammengefügten Zustand dargestellt, wobei die Verbindung der Gehäusemodule 14, 16 nach üblichen im Stande der Technik bekannten Methoden erfolgt sein kann, wie beispielsweise durch Verkleben. Die beiden äußeren Gehäusemodule 16 sind Verdampferkästen. Zwischen den beiden Verdampferkästen 16 liegen in diesem Fall zwei längliche, eine rechteckige Grundfläche aufweisende Gehäusezwischenmodule 14. Je nach dem, welche Größe und damit Leistungsklasse das in diesem Zwischenbereich vorgesehene Kondensatoreinheit aufweist, kann erfindungsgemäß entsprechend daran angepasst die Anzahl der Gehäusezwischenmodule 14 variieren und damit das gsamte Gehäuse 10 entsprechend breiter oder schmaler sein. Soweit keine Kondensatoreinheit vorgesehen ist, können die Gehäusezwischenmodule 14 auch ganz entfallen.

Die Verdampferkästen 16 haben jeweils im Bodenbereich längs der Mitte rechteckige Ausnehmungen 18 für die dort dann einzufügenden Wärmetauscherbatterien. Ferner verfügen die Verdampferkästen 16 im Bodenbereich außen und innen über rechteckige Öffnungen 20 für die Luftzu- und Luftabfuhr in und aus dem Fahrzeuginnenraum. Ohne auf die Anzahl und Form beschränkt zu sein, sind es in diesem Beispiel vier innere und vier äußere Öffnungen 20 je Verdampferkasten 16. Des Weiteren befinden sich in den Innenseiten 22 der Verdampferkästen 16, ohne auf die Anzahl und Fort beschränkt zu sein, jeweils vier rechteckige Öffnungen 24 für die Zufuhr von Frischluft von außerhalb. Die oberen Innen- und Außenränder der Verdampferkästen 16 weisen Dichtungsgummis 26 zum luft- und wasserdichten Verschluss der Verdampferkästen 16 mit jeweils einem Deckelteil auf. Es können auch andere im Stand der Technik bekannte Dichtungsmaterialien verwendet werden. Ferner ist eine formschlüssige luft- und wasserdichte Abdichtung von Verdampferkasten 16 und Deckelteil ohne Dichtungsmaterial denkbar.

Das in Figur 2a und 2b ohne Deckelteil dargestellte Gehäuse 10 einer erfindungsgemäßen Klima- oder / und Heizungsanlage kann beispielsweise aus Aluminium, stabilem Spritzgußkunststoff oder geschäumten Kunststoff bestehen.

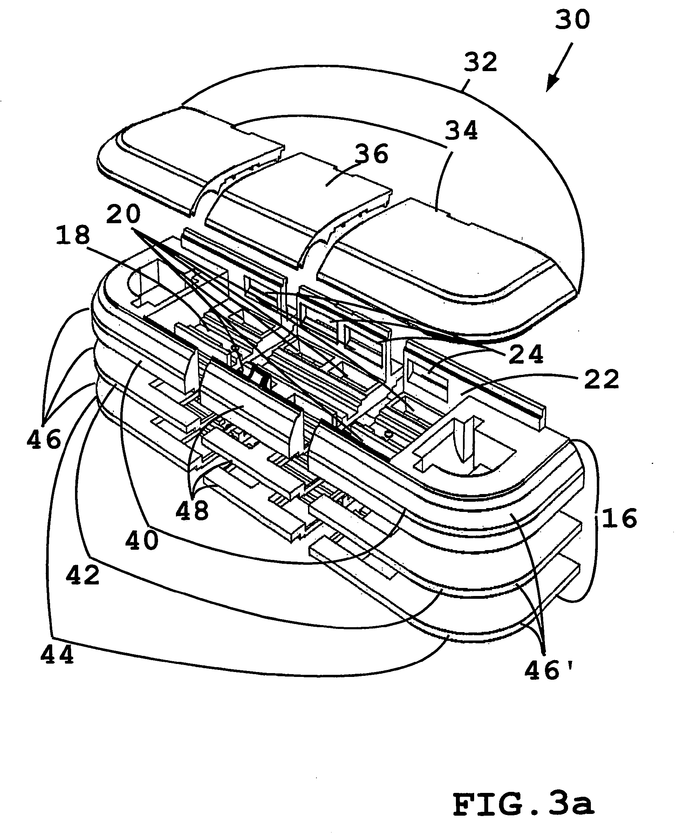

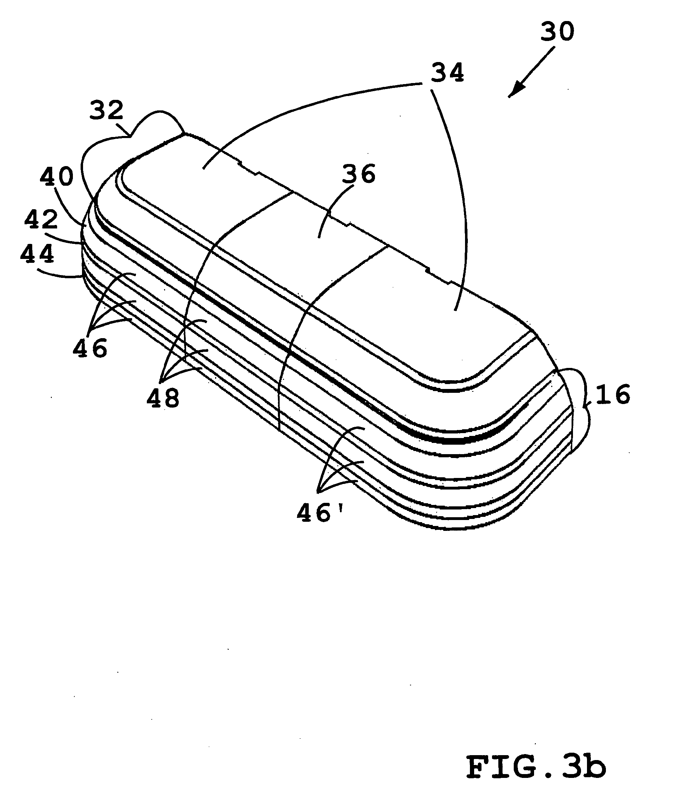

**Figur 3a** zeigt eine schematische Explosionsdarstellung eines Ausführungsbeispiels eines aus einem Deckelteil 32 und einem Verdampferkasten 16 bestehenden erfindungsgemäßen Gehäuses 30 einer erfindungsgemäßen Klima- oder / und Heizungsanlage. In **Figur 3b** ist das in Figur 3a gezeigte Gehäuse 30 im zusammengefügten Zustand dargestellt.

Das Deckelteil 32 besteht aus zwei Gehäuseteilendmodulen 34 und einem dazwischen liegenden Gehäuseteilzwischenmodul 36. Der Verdampferkasten 16 ist aus drei übereinander liegenden Gehäuseteilmodulen 40, 42, 44 aufgebaut, die jeweils wiederum in Längsrichtung aus zwei Gehäuseteilendmodulen 46, 46' und einem Gehäuseteilzwischenmodul 48 zusammengesetzt sind. Die Anzahl der übereinander liegenden Gehäuseteilmodule hier beispielsweise bestehend aus einem oberen Endmodul 40, einem mittleren Zwischenmodul 42 und einem unteren Endmodul 44 ist erfindungsgemäß an die entsprechende Höhe der einer Leistungsklasse zuzuordnenden Wärmetauscherbatterie, die in den Verdampferkasten 16 einzusetzen ist, angepasst. Für eine Wärmetauscherbatterie, die eine größere Höhe aufweist, können entsprechend mehr als drei übereinander liegenden Module den Verdampferkasten 16 bilden, oder für Wärmetauscherbatterien mit geringerer Höhe reichen beispielsweise nur ein oder zwei Gehäusemodule zur Bildung des Verdampferkastens 16 aus.

In der Mitte des Bodenbereichs des Verdampferkastens 16 befindet sich in Längsrichtung für die einzusetzende Wärmetauscherbatterie eine rechteckige Ausnehmung 18. Ferner verfügt der Verdampferkasten 16 im Bodenbereich außen und innen über rechteckige Öffnungen 20 für die Luftzu- und Luftabfuhr in und aus dem Fahrzeuginnenraum. Ohne auf die Anzahl und Form beschränkt zu sein, sind es in diesem Beispiel vier innere und vier äußere Öffnungen 20. Des Weiteren befinden sich in den Innenseiten 22 des Verdampferkastens 16, ohne auf die Anzahl und Form beschränkt zu sein, vier rechteckige Öffnungen 24 für die Zufuhr von Frischluft von außerhalb. Das Gehäuse 30 kann beispielsweise aus Aluminium, stabilem Spritzgusskunststoff oder geschäumten Kunststoff bestehen.

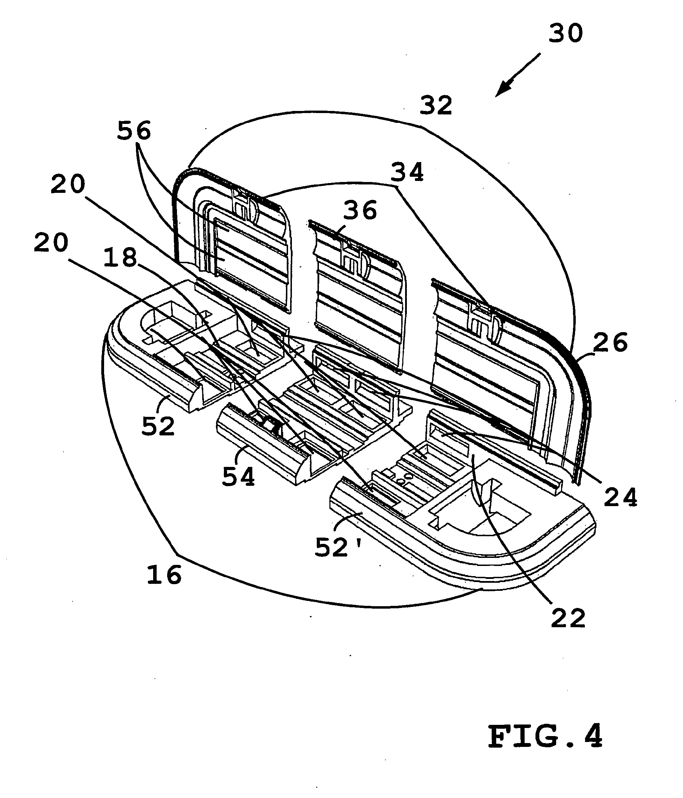

In **Figur 4** ist schematisch in Explosionsdarstellung ein weiteres Ausführungsbeispiel eines aus einem Deckelteil 32 und einem Verdampferkasten 16 bestehenden erfindungsgemäßen Gehäuses 30 einer erfindungsgemäßen Klima- oder / und Heizungsanlage gezeigt. Das Deckelteil 32 setzt sich erfindungsgemäß aus zwei Gehäuseteilendmodulen 34 und einem dazwischen liegenden Gehäuseteilzwischenmodul 36 zusammen. In der Innenseite des Deckelteils 32 befinden sich in Längsrichtung zwei rechteckige Einbuchtungen 56, die den dann eingesetzten Wärmetauscherbatterien bei geschlossenem Deckelteil 32 zusätzlichen Halt verleihen.

Der Verdampferkasten 16 besteht ebenfalls aus drei in Längsrichtung angeordneten Gehäusemodulen, nämlich aus zwei Gehäuseteilendmodulen 52, 52' und einem dazwischen liegenden Gehäuseteilzwischenmodul 54. Die Gehäuseteilendmodule 52, 52' verfügen im Bodenbereich außen und innen über rechteckige Öffnungen 20 für die Luftzu- und Luftabfuhr in und aus dem Fahrzeuginnenraum. Ohne auf die Anzahl und Form beschränkt zu sein, sind es jeweils eine innere und eine äußere Öffnungen 20 je Gehäuseteilendmodul 52, 52'. Des Weiteren befindet sich in den Innenseiten 22 der Gehäuseteilendmodule 52, 52', ohne auf die Anzahl und Form beschränkt zu sein, jeweils eine rechteckige Öffnungen 24 für die Zufuhr von Frischluft von außerhalb. Entsprechend weist das Gehäuseteilzwischenmodul innen und außen im Bodenbereich sowie an der Innenseite 22, ohne auf die Anzahl und Form beschränkt zu sein, jeweils zwei rechteckige Öffnungen 20, 24 auf. Ferner existiert im mittleren Bodenbereich sowohl in den beiden Gehäuseteilendmodulen 52, 52' als auch im Gehäuseteilzwischenmodul 54 eine insgesamt rechteckige Aussparung 18 zum einfügen einer Wärmetauscherbatterie. An den oberen Kanten der Module 52, 52', 54 des Verdampferkastens 16 und an der Unterkante des Deckelteils 32 sind Dichtungsgummis 26 angebracht, die zum luft- und wasserdichten Verschließen des Gehäuses 30 beitragen. Das erfindungsgemäße Gehäuse 30 kann beispielsweise aus Aluminium, stabilem Spritzgusskunststoff oder geschäumten Kunststoff bestehen.

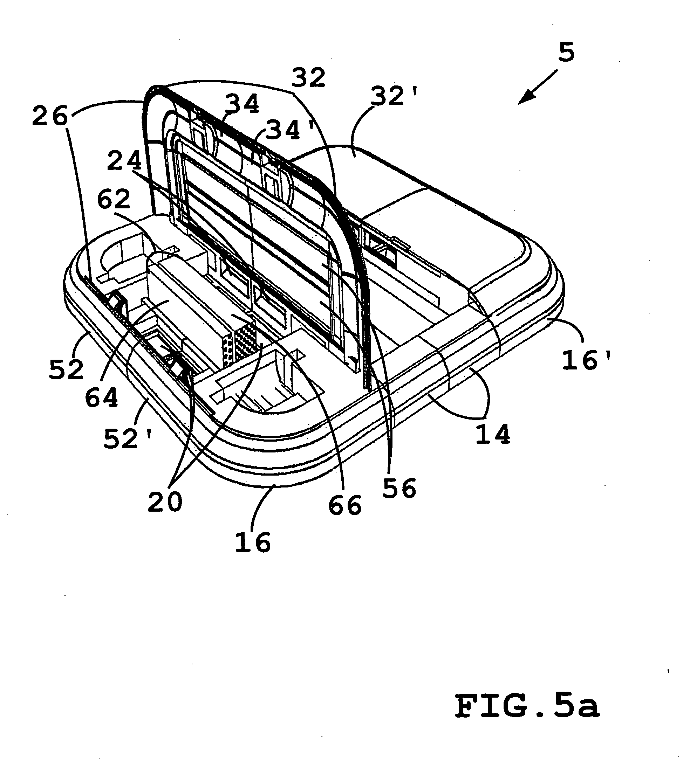

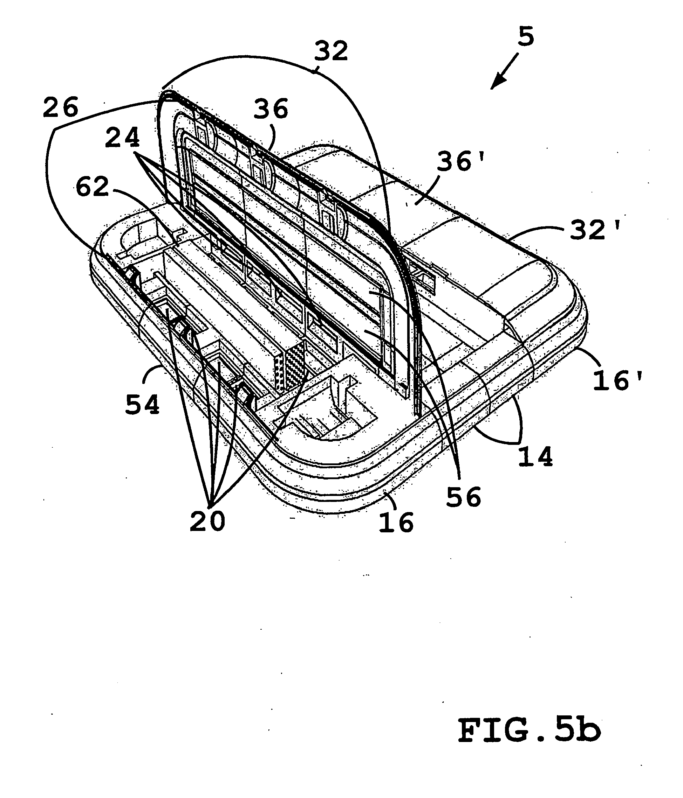

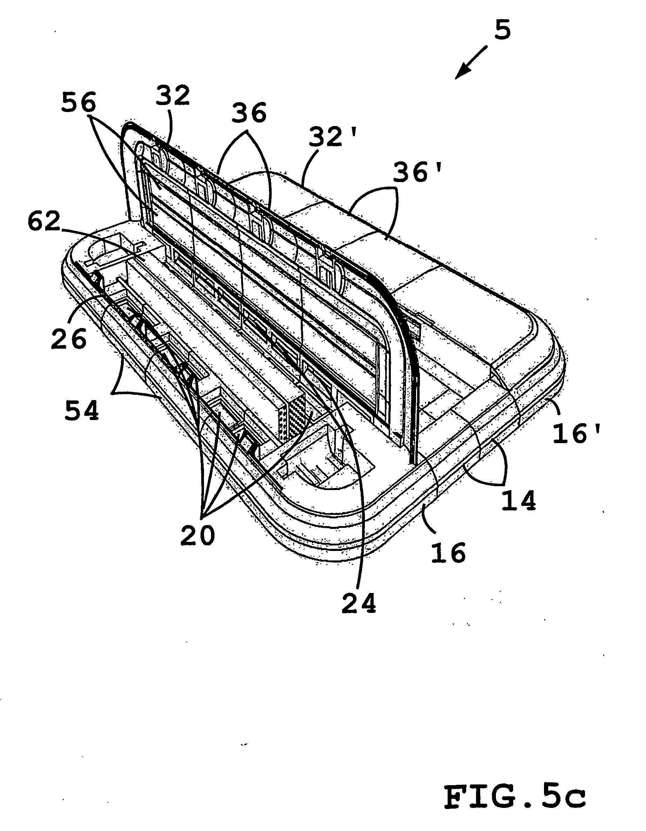

Die **Figuren 5a****,** **5b** **und** **5c** zeigen schematisch jeweils ein Ausführungsbeispiel erfindungsgemäßer Gehäuse 5 von Klima- und Heizungsanlagen verschiedener Größe, wobei das in Figur 5a dargestellte Gehäuse 5 eine zu einer kleinen, das in Figur 5b dargestellte Gehäuse 5 eine zu einer mittleren und das in Figur 5c dargestellte Gehäuse 5 eine zu einer großen Leistungsklasse zählende Wärmetauscherbatterie 62 enthält. Das Gehäuse 5 kann beispielsweise aus Aluminium, stabilem Spritzgusskunststoff oder geschäumten Kunststoff bestehen. Es weist an den beiden Außenseiten angeordnete Verdampferkästen 16, 16' mit Deckelteilen 32 und in der Mitte zwei dazwischen gelegenen, für die Kondensatoreinheit vorgesehene Gehäusezwischenteile 14 auf.

Der Verdampferkasten 16 einer Seite ist jeweils in den Figuren 5a, 5b und 5c aufgeklappt dargestellt. Er besteht in Figur 5a in Längsrichtung aus zwei aneinander gefügten Gehäuseteilendmodulen 52, 52'. Auch die Deckelteile 32, 32' enthalten in Figur 5a keine Gehäuseteilzwischenmodule, sondern nur jeweils zwei zusammengefügte Gehäuseteilendmodule 34, 34'. Die beiden Verdampferkästen 16, 16' weisen bei Figur 5a jeweils eine kleine Wärmetauscherbatterie 62 mit einem außen angeordneten Heizungswärmetauscher 64 und einem innen befindlichen Verdampfer 66 auf. Sowohl in der Innenwand der Verdampferkästen 16, 16' als auch in deren Bodenbereichen innen und außen sind jeweils zwei rechteckige Öffnungen 20, 24 zur Luftzu- und Luftabfuhr.

Die Deckelteile 32, 32' zu den Verdampferkästen 16, 16' verfügen in ihren Innenseiten über rechteckige Aussparungen 56, die im zugeklappten Zustand der Wärmetauscherbatterie 62 von oben zusätzlichen Halt verleihen. An den oberen Kanten der Verdampferkästen 16, 16' und an der Unterkante der Deckelteile 32, 32' sind Dichtungsgummis 26 angebracht, die zum luft- und wasserdichten Verschließen des Gehäuses 5 beitragen.

Das in **Figur 5b** dargestellte Gehäuse 5 unterscheidet sich von dem in Figur 5a gezeigten dadurch, dass zur Verlängerung sowohl in die beiden Verdampferkästen 16, 16', in deren Deckelteile 32, 32' als auch in die beiden für die Kondensatoreinheit vorgesehenen Gehäusezwischenmodule 14 jeweils ein zusätzliches Gehäuseteilzwischenmodul eingefügt ist. Durch diese erfindungsgemäße Ergänzung der Verdampferkästen 16, 16' mit jeweils einem Gehäuseteilzwischenmodul 54 und der Deckelteile 32, 32' mit je einem Gehäuseteilzwischenmodul 36 finden Wärmetauscherbatterien 62, die einer zu einer mittleren Leistungsklasse zählenden Größe aufweisen, ausreichend Platz im Gehäuse 5. Des Weiteren verfügt jeder der beiden Verdampferkästen 16, 16' in dieser Ausführung in der Innenwand und im Bodenbereich innen und außen über jeweils vier Öffnungen 20, 24. Die Aussparungen 56 im Deckelteil 32 sind für diese mittelgroße Wärmetauscherbatterie 62 entsprechend lang ausgebildet.

Das in **Figur 5c** dargestellte Gehäuse 5 unterscheidet sich von dem in Figur 5b gezeigten dadurch, dass zur besonders große Verlängerung sowohl in die beiden Verdampferkästen 16, 16', in deren Deckelteile 32, 32' als auch in die beiden für die Kondensatoreinheit vorgesehenen Gehäusezwischenmodule 14 jeweils nicht nur eins sondern zwei Gehäuseteilzwischenmodule eingefügt sind. Durch diese erfindungsgemäße Ergänzung der Verdampferkästen 16, 16' mit jeweils zwei Gehäuseteilzwischenmodulen 54 und der Deckelteile 32, 32' mit je zwei Gehäuseteilzwischenmodulen 36 finden Wärmetauscherbatterien 62, die einer zu einer großen Leistungsklasse zählenden Größe aufweisen, oder zwei hintereinander angeordnete Wärmetauscherbatterien einer kleineren Leistungsklasse, ausreichend Platz im Gehäuse 60. Des Weiteren verfügt jeder der beiden Verdampferkästen 16, 16' in dieser Ausführung in der Innenwand und im Bodenbereich innen und außen über jeweils sechs Öffnungen 20, 24. Die Aussparungen 56 im Deckelteil 32 sind für diese große bzw. für zwei hintereinandergesetzte kleine Wärmetauscherbatterie / en 62 entsprechend lang ausgebildet.

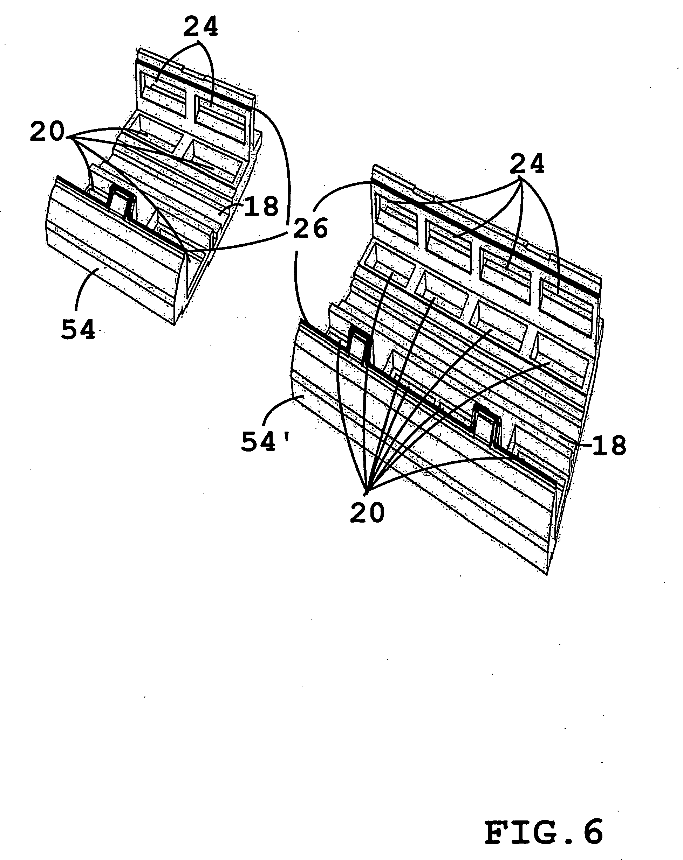

In **Figur 6** sind zwei unterschiedlich breite erfindungsgemäße Gehäuseteilzwischenmodule 54, 54', die in einen in Figur 4 gezeigten Verdampferkastens einsetzbar sind, dargestellt. Das schmalere Gehäuseteilzwischenmodul 54 weist sowohl an der Innenwand 22 als auch innen und außen im Bodenbereich jeweils zwei rechteckige Öffnungen 24, 20 auf. Hingegen sind es bei dem breiteren Gehäuseteilzwischenmodul 54' jeweils vier rechteckige Öffnungen 20, 24. Längs der Mitte der Bodenbereiche der beiden Gehäuseteilzwischenmodule 54, 54' befindet sich jeweils eine Ausnehmung 18 für eine Wärmetauscherbatterie. An den oberen Kanten der Gehäuseteilzwischenmodule 54, 54' sind Dichtungsgummis 26 befestigt. Die Gehäuseteilzwischenmodule 54, 54' können beispielsweise aus Aluminium, stabilem Spritzgusskunststoff oder geschäumten Kunststoff bestehen.

Zum Beispiel kann sich ein erfindungsgemäß modular aufgebaute Gehäuse der Klima- oder / und Heizungsanlage innerhalb des Fahrzeugs im Deckenbereich der Fahrgastzelle oder teilintegriert im Fahrzeugdach befinden. Auch können beispielsweise in einem erfindungsgemäß modular aufgebauten Gehäuse die Wärmetauscherbatterie oder die Wärmetauscherbatterieeinheit und der Kondensator oder die Kondensatoreinheit in Längsrichtung hintereinander in Reihe auf einem Fahrzeugdach angeordnet sein.

Ferner wird sowohl für ein erfindungsgemäßes Gehäuse für eine Klima- oder / und Heizungsanlage umfassend zumindest drei Gehäusemodule und geeignet zur Umhausung zumindest eines Bauelements einer erfindungsgemäßen Klima- oder / Heizungsanlage, wobei das Gehäuse zumindest zwei Gehäuseteilendmodule und eine beliebige Anzahl (n=1, 2,...) von mindestens einem dazwischen gefügten Gehäuseteilzwischenmodul enthält und in der Ausdehnung zumindest mit durch die Anzahl und / oder Größe der / des Gehäuseteilzwischenmodul(e)/s je nach Größe zumindest eines im Gehäuse einfügbaren Bauelements der Klima- oder / und Heizungsanlage ausgestaltet ist, als auch für ein erfindungsgemäßes Gehäusemodul für eine erfindungsgemäßen Klima- oder / Heizungsanlage einzeln Schutz beansprucht.

## Patentansprüche

1. Klima- oder / und Heizungsanlage (1) für ein Fahrzeug mit einem zumindest drei Gehäusemodule (7, 8, 14, 16, 16', 32, 32', 34, 36, 40, 42, 44, 46, 46', 48, 52, 52', 54, 54') umfassenden Gehäuse (5, 10, 30) umhausend zumindest ein Bauelement (9, 62) der Klima- oder / und Heizungsanlage (1) **dadurch gekennzeichnet, dass**
das Gehäuse (5, 10, 30) und / oder ein aus Gehäusemodulen (7, 8, 14, 34, 36, 40, 42, 44, 46, 46', 48, 52, 52', 54, 54') aufgebautes Gehäuseteil (16, 16', 32, 32') zwei Gehäuseteilendmodule (8, 16, 34, 40, 44, 46, 46', 52, 52') und eine beliebige Anzahl (n=1, 2,...) von mindestens einem dazwischen gefügten Gehäuseteilzwischenmodul (7, 14, 36, 42, 48, 54, 54') enthält und
in der Ausdehnung zumindest durch die Anzahl und / oder Größe der / des Gehäuseteilzwischenmodul(e)/s (7, 14, 36, 48, 54, 54') je nach Größe zumindest eines im Gehäuse (5, 10, 30) befindlichen Bauelements (9, 62) der Klima- oder / und Heizungsanlage (1) ausgestaltet ist.

2. Klima- oder / und Heizungsanlage (1) nach Anspruch 1,
wobei das Gehäuse (5, 10, 30) auf einem Dach (3) eines Fahrzeugs anbringbar ausgestaltet ist.

3. Klima- oder / und Heizungsanlage (1) nach Anspruch 1,
wobei das Gehäuse (5, 10, 30) zum Teil in einem Dach (3) eines Fahrzeugs integrierbar ausgestaltet ist.

4. Klima- oder / und Heizungsanlage (1) nach einem der Ansprüche 1 bis 3, wobei zumindest zwei der Gehäusemodule (7, 8, 14, 16, 16', 32, 32', 34, 36, 40, 42, 44, 46, 46', 48, 52, 52', 54, 54') luft- und wasserdicht miteinander verbunden sind.

5. Klima- oder / und Heizungsanlage (1) nach einem der Ansprüche 1 bis 4, wobei zumindest zwei der Gehäusemodule (7, 8, 14, 16, 16', 32, 32', 34, 36, 40, 42, 44, 46, 46', 48, 52, 52', 54, 54') starr miteinander verbunden sind.

6. Klima- oder / und Heizungsanlage (1) nach einem der Ansprüche 1 bis 5, wobei zumindest zwei der Gehäusemodule (7, 8, 14, 16, 16', 32, 32', 34, 36, 40, 42, 44, 46, 46', 48, 52, 52', 54, 54') nicht lösbar miteinander verbunden sind.

7. Klima- oder / und Heizungsanlage (1) nach einem der Ansprüche 1 bis 5, wobei zumindest zwei der Gehäusemodule (7, 8, 14, 16,16', 32, 32', 34, 36, 40, 42, 44, 46, 46', 48, 52, 52', 54, 54') lösbar miteinander verbunden sind.

8. Klima- oder / und Heizungsanlage (1) nach einem der Ansprüche 1 bis 7, wobei das Gehäuse (5, 10,' 30) zumindest zur Umhausung eines Gebläses oder einer Gebläseeinheit ausgestaltet ist.

9. Klima- oder / und Heizungsanlage (1) nach einem der Ansprüche 1 bis 8, wobei zu den Gehäuseteilen (16, 16', 32, 32') ein Deckelteil (32, 32') und / oder ein Verdampferkasten (16, 16') zählen und
das Deckelteil (32, 32') und / oder der Verdampferkasten (16, 16') als Gehäusemodule
- zwei Gehäuseteilendmodule (34, 40, 44, 46, 46', 52, 52') und
- eine beliebige Anzahl (n= 1, 2,...) dazwischen gefügter Gehäuseteilzwischenmodule (36, 42, 48, 54, 54')
enthält / enthalten.

10. Klima- oder / und Heizungsanlage (1) nach einem der Ansprüche 1 bis 9, wobei zumindest ein Gehäusemodul (7, 8, 14, 16, 16', 32, 32', 34, 36, 40, 42, 44, 46, 46', 48, 52, 52', 54, 54') zumindest mit aus geschäumten Kunststoff besteht.

11. Klima- oder / und Heizungsanlage (1) nach einen der Ansprüche 1 bis 10, wobei sie zum Einbau in, an oder auf einem Omnibus oder Schienenfahrzeug ausgestaltet ist.

12. Gehäuse (5, 10, 30) für eine Klima- oder / und Heizungsanlage (1) umfassend zumindest drei Gehäusemodule (7, 8, 14, 16, 16', 32, 32', 34, 36, 40, 42, 44, 46, 46', 48, 52, 52', 54, 54') und geeignet zur Umhausung zumindest eines Bauelements (9, 62) einer Klima- oder / Heizungsanlage (1) nach einem der Ansprüche 1 bis 11,
wobei das Gehäuse (5, 10, 30) zumindest zwei Gehäuseteilendmodule (8, 16, 34, 40, 44, 46, 46', 52, 52') und eine beliebige Anzahl (n=1, 2,...) von mindestens einem dazwischen gefügten Gehäuseteilzwischenmodul (7, 14, 36, 42, 48, 54, 54') enthält und
in der Ausdehnung zumindest die Anzahl und / oder Größe der / des Gehäuseteilzwischenmodul(e)/s (7, 14, 36, 48, 54, 54') je nach Größe zumindest eines im Gehäuse (5, 10, 30) einfügbaren Bauelements (9, 62) der Klima- oder / und Heizungsanlage (1) ausgestaltet ist.

13. Gehäusemodul (7, 8, 14, 34, 36, 38, 40, 42, 44, 46, 46', 48, 52, 52', 54, 54') eines für die Umhausung zumindest eines Bauelements (9, 62) einer Klima- oder / und Heizungsanlage (1) geeigneten Gehäuses (5, 10, 30) für eine Klima- oder / und Heizungsanlage (1) nach einem der Ansprüche 1 bis 11.

## Claims

1. Air-conditioning and/or heating system (1) for a vehicle, having a housing (5, 10, 30) which comprises at least three housing modules (7, 8, 14, 16, 16', 32, 32', 34, 36, 40, 42, 44, 46, 46', 48, 52, 52', 54, 54') and which houses at least one component (9, 62) of the air-conditioning and/or heating system (1), **characterized in that**
the housing (5, 10, 30) and/or a housing part (16, 16', 32, 32') which is constructed from housing modules (7, 8, 14, 34, 36, 40, 42, 44, 46, 46', 48, 52, 52', 54, 54') comprises two housing part end modules (8, 16, 34, 40, 44, 46, 46', 52, 52') and an arbitrary number (n=1, 2,...) of at least one housing part intermediate module (7, 14, 36, 42, 48, 54, 54') inserted between said housing part end modules (8, 16, 34, 40, 44, 46, 46', 52, 52'), and
is configured in terms of extent at least by means of the number and/or size of the housing part intermediate module(s) (7, 14, 36, 48, 54, 54') according to the size of at least one component (9, 62), which is situated in the housing (5, 10, 30), of the air-conditioning and/or heating system (1).

2. Air-conditioning and/or heating system (1) according to Claim 1, with the housing (5, 10, 30) being designed such that it can be attached to a roof (3) of a vehicle.

3. Air-conditioning and/or heating system (1) according to Claim 1, with the housing (5, 10, 30) being designed such that it can be partially integrated in a roof (3) of a vehicle.

4. Air-conditioning and/or heating system (1) according to one of Claims 1 to 3, with at least two of the housing modules (7, 8, 14, 16, 16', 32, 32', 34, 36, 40, 42, 44, 46, 46', 48, 52, 52', 54, 54') being connected to one another in an air-tight and watertight fashion.

5. Air-conditioning and/or heating system (1) according to one of Claims 1 to 4, with at least two of the housing modules (7, 8, 14, 16, 16', 32, 32', 34, 36, 40, 42, 44, 46, 46', 48, 52, 52', 54, 54') being rigidly connected to one another.

6. Air-conditioning and/or heating system (1) according to one of Claims 1 to 5, with at least two of the housing modules (7, 8, 14, 16, 16', 32, 32', 34, 36, 40, 42, 44, 46, 46', 48, 52, 52', 54, 54') being non-detachably connected to one another.

7. Air-conditioning and/or heating system (1) according to one of Claims 1 to 5, with at least two of the housing modules (7, 8, 14, 16, 16', 32, 32', 34, 36, 40, 42, 44, 46, 46', 48, 52, 52', 54, 54') being detachably connected to one another.

8. Air-conditioning and/or heating system (1) according to one of Claims 1 to 7, with the housing (5, 10, 30) being designed at least so as to house a fan or a fan unit.

9. Air-conditioning and/or heating system (1) according to one of Claims 1 to 8, with the housing parts (16, 16', 32, 32') including a cover part (32, 32') and/or an evaporator box (16, 16'), and with the cover part (32, 32') and/or the evaporator box (16, 16') comprising, as housing modules,
- two housing part end modules (34, 40, 44, 46, 46', 52, 52') and
- an arbitrary number (n= 1, 2,....) of housing part intermediate modules (36, 42, 48, 54, 54') inserted between said housing part end modules (34, 40, 44, 46, 46', 52, 52').

10. Air-conditioning and/or heating system (1) according to one of Claims 1 to 9, with at least one housing module (7, 8, 14, 16, 16', 32, 32', 34, 36, 40, 42, 44, 46, 46', 48, 52, 52', 54, 54') being composed at least partially of foamed plastic.

11. Air-conditioning and/or heating system (1) according to one of Claims 1 to 10, which is designed for installation in or on a bus or rail vehicle.

12. Housing (5, 10, 30) for an air-conditioning and/or heating system (1), which housing (5, 10, 30) comprises at least three housing modules (7, 8, 14, 16, 16', 32, 32', 34, 36, 40, 42, 44, 46, 46', 48, 52, 52', 54, 54') and is suitable for housing at least one component (9, 62) of an air-conditioning and/or heating system (1) according to one of Claims 1 to 11,
with the housing (5, 10, 30) comprising at least two housing part end modules (8, 16, 34, 40, 44, 46, 46', 52, 52') and an arbitrary number (n=1, 2,...) of at least one housing part intermediate module (7, 14, 36, 42, 48, 54, 54') inserted between said housing part end modules (8, 16, 34, 40, 44, 46, 46', 52, 52'), and
being configured in terms of extent at least by means of the number and/or size of the housing part intermediate module(s) (7, 14, 36, 48, 54, 54') according to the size of at least one component (9, 62), which can be inserted in the housing (5, 10, 30), of the air-conditioning and/or heating system (1).

13. Housing module (7, 8, 14, 34, 36, 38, 40, 42, 44, 46, 46', 48, 52, 52', 54, 54') of a housing (5, 10, 30), which is suitable for housing at least one component (9, 62) of an air-conditioning and/or heating system (1), for an air-conditioning and/or heating system (1) according to one of Claims 1 to 11.

## Revendications

1. Installation (1) de climatisation et/ou de chauffage pour véhicule automobile, qui présente un boîtier (5, 10, 30) qui comprend au moins trois modules de boîtier (7, 8, 14, 16, 16', 32, 32', 34, 36, 40, 42, 44, 46, 46', 48, 52, 52', 54, 54') et qui loge au moins un composant (9, 62) de l'installation (1) de climatisation et/ou de chauffage,
**caractérisée en ce que**
le boîtier (5, 10, 30) et/ou une partie de boîtier (16, 16', 32, 32') constituée de modules de boîtier (7, 8, 14, 34, 36, 40, 42, 44, 46, 46', 48, 52, 52', 54, 54') contient deux modules partiels d'extrémité de boîtier (8, 16, 34, 40, 44, 46, 46', 52, 52') et un ou plusieurs (n = 1, 2, ...) modules partiels intermédiaires de boîtier (7, 14, 36, 42, 48, 54, 54') insérés entre les précédents et
est configuré dans son extension au moins par le nombre et/ou la taille du ou des modules partiels intermédiaires de boîtier (7, 14, 36, 48, 54, 54') selon la taille d'au moins un composant (9, 62) de l'installation (1) de climatisation et/ou de chauffage située dans le boîtier (5, 10, 30).

2. Installation (1) de climatisation et/ou de chauffage selon la revendication 1, dans laquelle le boîtier (5, 10, 30) est configuré de manière à pouvoir être placé sur le toit (3) du véhicule.

3. Installation (1) de climatisation et/ou de chauffage selon la revendication 1, dans laquelle le boîtier (5, 10, 30) est configuré de manière à pouvoir être intégré au moins en partie dans le toit (3) du véhicule.

4. Installation (1) de climatisation et/ou de chauffage selon l'une des revendications 1 à 3, dans laquelle au moins deux des modules de boîtier (7, 8, 14, 16, 16', 32, 32', 34, 36, 40, 42, 44, 46, 46', 48, 52, 52', 54, 54') sont reliés l'un à l'autre de manière étanche à l'air et à l'eau.

5. Installation (1) de climatisation et/ou de chauffage selon l'une des revendications 1 à 4, dans laquelle au moins deux des modules de boîtier (7, 8, 14, 16, 16', 32, 32', 34, 36, 40, 42, 44, 46, 46', 48, 52, 52', 54, 54') sont reliés rigidement l'un à l'autre.

6. Installation (1) de climatisation et/ou de chauffage selon l'une des revendications 1 à 5, dans laquelle au moins deux des modules de boîtier (7, 8, 14, 16, 16', 32, 32', 34, 36, 40, 42, 44, 46, 46', 48, 52, 52', 54, 54') sont reliés l'un à l'autre de manière non libérable.

7. Installation (1) de climatisation et/ou de chauffage selon l'une des revendications 1 à 5, dans laquelle au moins deux des modules de boîtier (7, 8, 14, 16, 16', 32, 32', 34, 36, 40, 42, 44, 46, 46', 48, 52, 52', 54, 54') sont reliés l'un à l'autre de manière libérable.

8. Installation (1) de climatisation et/ou de chauffage selon l'une des revendications 1 à 7, dans laquelle le boîtier (5, 10, 30) est configuré de manière à pouvoir loger au moins un ventilateur ou une unité de ventilateur.

9. Installation (1) de climatisation et/ou de chauffage selon l'une des revendications 1 à 8, dans laquelle une partie de couvercle (32, 32') et/ou un caisson d'évaporateur (16, 16') font partie des parties de boîtier (16, 16', 32, 32') et en ce que la partie de couvercle (32, 32') et/ou le caisson d'évaporateur (16, 16') formant des modules de boîtier contiennent
- deux modules partiels d'extrémité de boîtier (34, 40, 44, 46, 46', 52, 52') et
- un nombre quelconque (n = 1, 2, ...) de modules partiels intermédiaires de boîtier (36, 42, 48, 54, 54') insérés entre les précédents.

10. Installation (1) de climatisation et/ou de chauffage selon l'une des revendications 1 à 9, dans laquelle au moins un module de boîtier (7, 8, 14, 16, 16' , 32, 32', 34, 36, 40, 42, 44, 46, 46', 48, 52, 52', 54, 54') est constitué au moins en partie d'une matière synthétique moussée.

11. Installation (1) de climatisation et/ou de chauffage selon l'une des revendications 1 à 10, qui est configurée pour être montée dans, contre ou sur un omnibus ou un véhicule ferroviaire.

12. Boîtier (5, 10, 30) pour installation (1) de climatisation et/ou de chauffage, comprenant au moins trois modules de boîtier (7, 8, 14, 16, 16', 32, 32', 34, 36, 40, 42, 44, 46, 46', 48, 52, 52', 54, 54') et convenant pour loger au moins un composant (9, 62) d'une installation (1) de climatisation et/ou de chauffage selon l'une des revendications 1 à 11,
le boîtier (5, 10, 30) contenant au moins deux modules partiels d'extrémité de boîtier (8, 16, 34, 40, 44, 46, 46', 52, 52') et un ou plusieurs (n = 1, 2, ...) modules partiels intermédiaires de boîtier (7, 14, 36, 42, 48, 54, 54') insérés entre les précédents et
est configuré dans son extension au moins par le nombre et/ou la taille du ou des modules partiels intermédiaires de boîtier (7, 14, 36, 48, 54, 54') en fonction de la taille d'au moins un composant (9, 62) de l'installation (1) de climatisation et/ou de chauffage qui peut être inséré dans le boîtier (5, 10, 30).

13. Module de boîtier (7, 8, 14, 34, 36, 38, 40, 42, 44, 46, 46', 48, 52, 52', 54, 54') d'un boîtier (5, 10, 30) d'une installation (1) de climatisation et/ou de chauffage selon l'une des revendications 1 à 11, qui convient pour loger au moins un composant (9, 62) de l'installation (1) de climatisation et/ou de chauffage.
